# EUROPEAN PATENT APPLICATION

(11) **EP 2 130 474 A2**
(43) Date of publication of application: **09.12.2009**
(21) Application number: 09011237.6
(22) Date of filing: 24.09.2009
(51) Int. Cl.: A47L 9/00, A01G 1/12

(54) **Debris Collector**

(30) Priority: 31.07.2006 GB 0615212
(62) Divisional of application: 07252928.2
(71) Applicant: Husqvarna UK Limited, County Durham, DL5 6UP (GB)
(72) Inventor: The designation of the inventor has not yet been filed
(74) Representative: Finkele, Rolf

(57) **Abstract**

A debris collector comprises a chassis (1) and an impeller (14) for establishing a flow of air. A duct (4, 5) is supported by the chassis (1) for conveying loose material entrained in a stream of air generated by the impeller (14) towards a proximal region of the duct from a collection mouth (10) at a distal end thereof. The impeller (14) is mounted in a housing (3) at the proximal end of the duct (4, 5), the housing being pivotably attached to the chassis (1) in such a manner that pivotal movement of the housing away from the chassis exposes the impeller and the downstream end of the duct (4, 5) for cleaning purposes.

## Description

This invention relates to an apparatus for collecting debris including grass cuttings, vegetation, fallen leaves and other rubbish frequently encountered on gardens, public highways and parklands.

Our European Patent 501675 describes a collection device comprising a chassis, means for supporting the device above ground datum, an impeller for establishing a flow of air, a duct directly or indirectly supported on the chassis for conveying loose material entrained in a stream of air from said source towards a downstream region thereof from a collection mouth at an upstream end thereof, a removable collection container for collecting said loose material and disposed in proximity to the downstream region of the duct, at least one air outlet disposed adjacent the collection mouth, each aperture serving to direct at least a portion of the stream of air downstream of the collection mouth so as to draw loose material into the mouth and transport the same via the duct into the collection container.

An improved version of this type of collection device can be operated in either a "vac" mode, in which the impeller sucks in air from the collection mouth together with entrained debris, and a "blow" mode in which air is directed from the impeller towards the collection mouth via a dedicated passageway so that the debris collector can be used to blow debris into suitable heaps for subsequent collection. This modified form of debris collector includes a rotary valve for diverting the stream of air from the impeller either to a debris collection bag or to the dedicated "blow" passageway.

One disadvantage of this arrangement is that the rotary valve is bulky, and increases the overall size of the debris collector. Moreover, because of the configuration of the rotary valve debris tends to adhere thereto, which reduces the efficiency of debris collection, and requires frequent cleaning. Unfortunately, the rotary valve is difficult to access, so cleaning is difficult if not impossible without dismantling the debris collector.

This known debris collector also suffers from debris adhering to the impeller and to the passageways to and from the impeller. Here again, adhered debris reduces the efficiency of the machine, and its removal is extremely difficult or impossible without dismantling the machine.

The present invention provides a debris collector comprising a chassis; an impeller for establishing a flow of air; and a duct supported by the chassis for conveying loose material entrained in a stream of air generated by the impeller towards a proximal region of the duct from a collection mouth at a distal end thereof; wherein the impeller is mounted in a housing at the proximal end of the duct, the housing being pivotably attached to the chassis in such a manner that pivotal movement of the housing away from the chassis exposes the impeller and the downstream end of the duct for cleaning purposes.

The debris collector may further comprise a removable collection container for collecting the loose material, and the chassis being formed with a nozzle for directing the stream of air and loose material from the impeller into the removable collection container.

Preferably, the nozzle is directly aligned with the impeller, and is provided with smooth side walls for directing the air stream and loose material into the removable collection container.

In a preferred embodiment, the debris collector further comprises an air passageway leading from the impeller to the collection mouth, the air passageway being separate from the duct.

Advantageously, the debris collector further comprises a valve for directing the stream of air from the impeller either into the nozzle or into the air passageway.

Conveniently, the valve is a slide valve mounted in the chassis for movement between a first position, in which the air stream passes from the impeller into the air passageway, and a second position, in which the air stream passes from the impeller into the nozzle.

Preferably, the slide valve is positioned in such a manner that pivotal movement of the housing relative to the chassis to expose the impeller and the downstream end of the duct, also exposes the slide valve for cleaning purposes. The slide valve may define a substantially smooth air-stream-engaging surface.

In a preferred embodiment, the duct is constituted by primary and secondary ducts, the primary duct being fixed to the chassis, and the secondary duct being telescopically mounted with respect to the primary duct.

Preferably, the air passageway is constituted by first and second air passageways associated respectively with the primary and secondary ducts.

Advantageously, the first air passageway is positioned on the exterior of the primary duct, and the second air passageway is positioned within the secondary duct.

Conveniently, the first and second air passageways are so formed that, when the secondary duct is fully telescoped out of the primary duct, the distal end of the first air passageway is contiguous with the proximal end of the second air passageway.

Preferably, the distal end of the primary duct and the proximal end of the secondary duct are provided with interengageable means for locking the two ducts together when the secondary duct is fully telescoped out with respect to the primary duct. Advantageously, the interengageable means is constituted by an aperture formed in the proximal end of the secondary duct, and by a flanged tab formed at the distal end of the primary duct, the flanged tab being engageable in the aperture when the secondary duct is fully telescoped out of the primary duct.

The interengageable means may further comprise complementary screw threads formed at the distal end of the primary duct and at the proximal of the secondary duct, the arrangement being such that, in the fully telescoped out configuration, engagement and rotation of the screw threads moves the flanged tab of the primary duct into the aperture of the secondary duct and moves the distal end of the first air passageway so as to be contiguous with the proximal of the second air passageway.

The invention also provides a debris collector comprising a chassis, an impeller for establishing a flow of air, and a duct supported by the chassis for conveying loose material entrained in a stream of air generated by the impeller towards a proximal region of the duct from a collection mouth at a distal end thereof, wherein the duct is constituted by primary and secondary ducts, the primary duct being fixed to the chassis, and the secondary duct being telescopically mounted with respect to the primary duct.

The invention further provides a debris collector comprising a chassis, an impeller for establishing a flow of air, a duct supported by the chassis for conveying loose material entrained in a stream of air generated by the impeller towards a proximal region of the duct from a collection mouth at a distal end thereof, a removable collection container for collecting the loose material, an air passageway leading from the impeller to the collection mouth, the air passageway being separate from the duct, and a slide valve for directing the stream of air from the impeller either into the removable collection container or into the air passageway.

The invention will now be described in greater detail, by way of example, with reference to the drawings, in which:-
Figure 1 is a perspective view of a debris collector constructed in accordance with the invention;
Figure 2 is a schematic side elevation of the debris collector in the "vac" mode;
Figure 3 is a view similar to Figure 2, but showing the debris collector in the "blow" mode;
Figure 4 is a perspective view of the proximal end portion of the debris collector, showing its motor housing partially pivoted away from its main body;
Figure 5 is a view similar to that of Figure 4, but showing the motor housing pivoted fully away from the main body;
Figure 6 shows the distal end of the debris collector with its secondary tube telescoped within its primary tube;
Figure 7 is a view similar to that of Figure 6, but shows the secondary tube fully telescoped out of the primary tube;
Figure 8 shows the locking of the primary and secondary tubes in the fully telescoped position; and
Figure 9 is a perspective view showing the air outlet path provided by the primary and secondary tubes in their fully telescoped configuration.

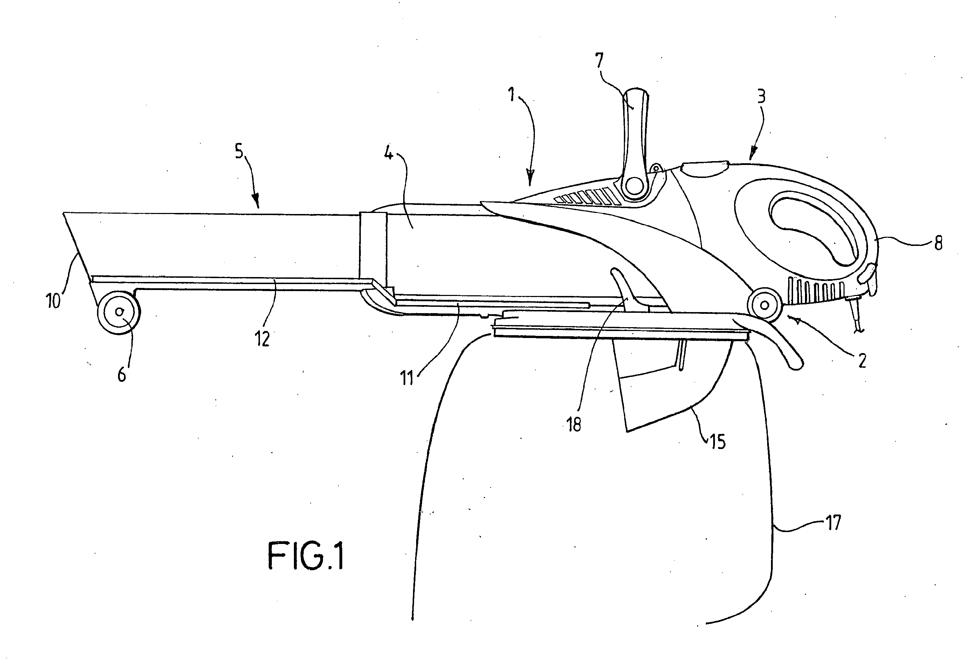

Referring to the drawings, Figure 1 shows a debris collector having a main body 1 pivotally connected, at 2, to a housing 3. A primary tube 4 is fixed to the main body 1, and a secondary tube 5 is telescopically mounted within the primary tube. A wheel 6 is provided at the distal end of the secondary tube 5. Handles 7 and 8 are associated respectively with the main body 1 and the motor housing 3.

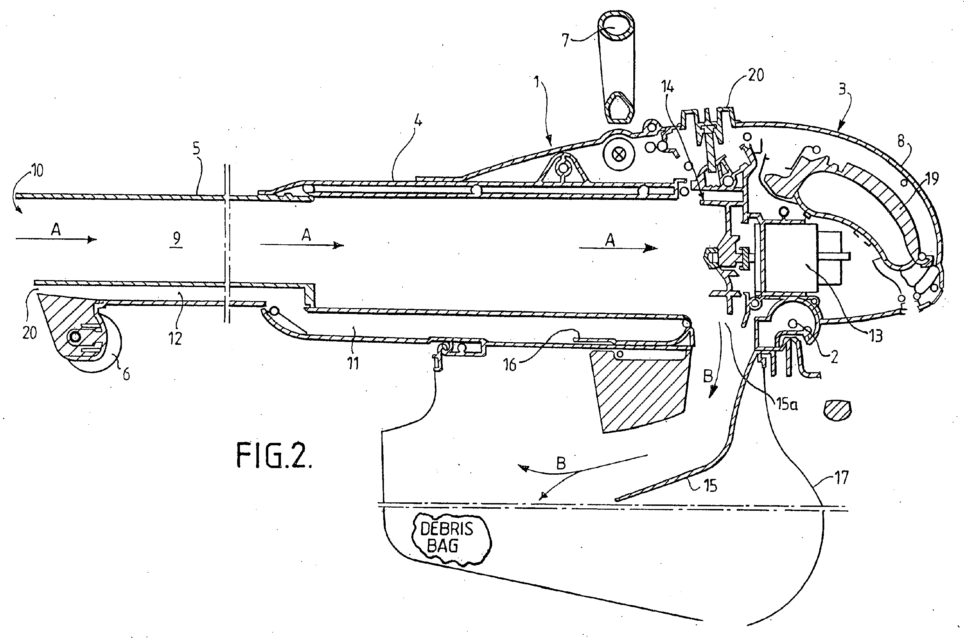

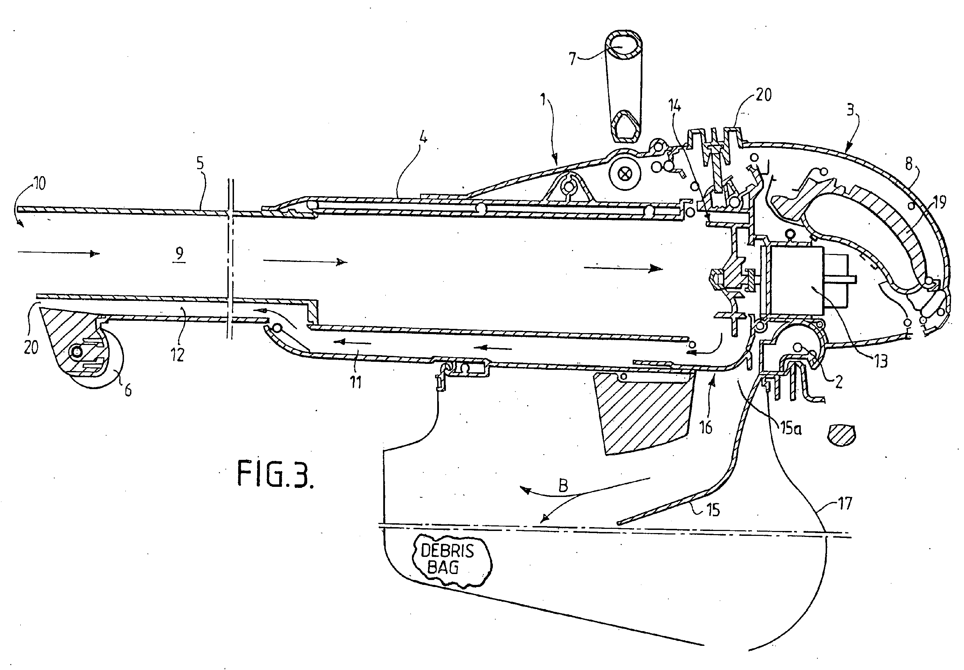

As shown in Figures 2 and 3, the telescoped primary and secondary tubes 4 and 5 define an internal duct 9 which leads from an inlet (collection mouth) 10 at the distal end of the secondary tube towards the housing 3 provided at the proximal end of the collector. Contiguous passageways 11 and 12 are formed within the primary and secondary tubes 4 and 5.

The housing 3 houses an impeller 14 which is in drivable engagement with a motor 13. When the motor 13 is activated, the impeller 14 draws in a stream of air, via the inlet 10, as indicated by the arrows A. A nozzle 15 is formed on the main body 1, the entrance 15a to the nozzle being in alignment with the impeller 14. A slide valve 16 is provided for controlling the flow of air from the impeller 14 to either the nozzle 15 or to the passageway 11. A debris bag 17 is fitted to the main body 1 to surround the outlet 15b of the nozzle 15. A lever 18 is attached to the slide valve 16 for moving the slide valve between first and second operating positions.

When the slide valve 16 is in the first operating position (see Figure 2), the debris collector is in the "vac" mode. In this position, actuation of the motor 13, by means of a switch 19 provided on the handle 8 of the motor housing 3, causes the impeller 14 to draw a stream of air into the collector from the inlet 10 at the distal end of the secondary tube 5. Thus, if the inlet 10 is positioned adjacent to debris to be collected from the ground, the debris will be drawn in with the air stream A. As the slide valve 16 is positioned to close the passageway 11 and open the nozzle 15, the debris passes along the nozzle and into the debris bag 17 as indicated by the arrows B. Thus, the flow of air and debris from the impeller 14 to the debris bag 17 passes along smooth/tangential side walls defined by the nozzle 15, thereby reducing adherence of debris during its passage from the impeller to the debris bag. The motor 13 is rated to drive the impeller 14 at 13, 000 to 17,000 rpm, so that frangible debris striking the impeller is reduced in size, thereby increasing the storage capacity of the debris bag 17.

When the slide valve 16 is in the second operating position (see Figure 3), the debris collector is in the "blow" mode, in which case air from the impeller 14 is directed into the passageway 11, from where it passes along the passageway 12 and out of outlet 20 at the distal end of that passageway. In this position, the debris collector can be used to blow debris into suitable heaps for subsequent collection.

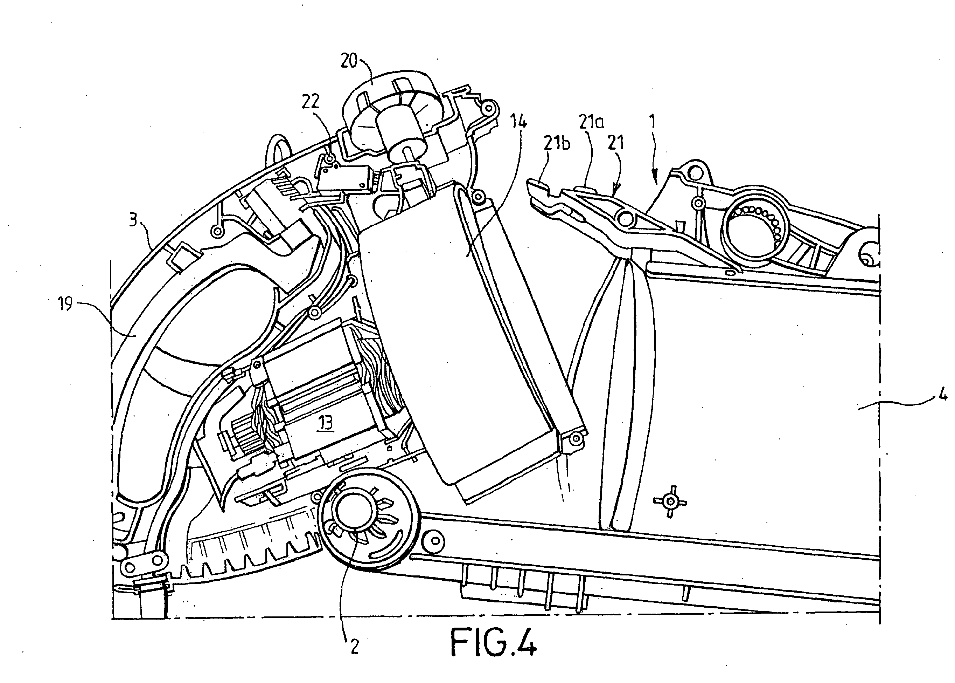

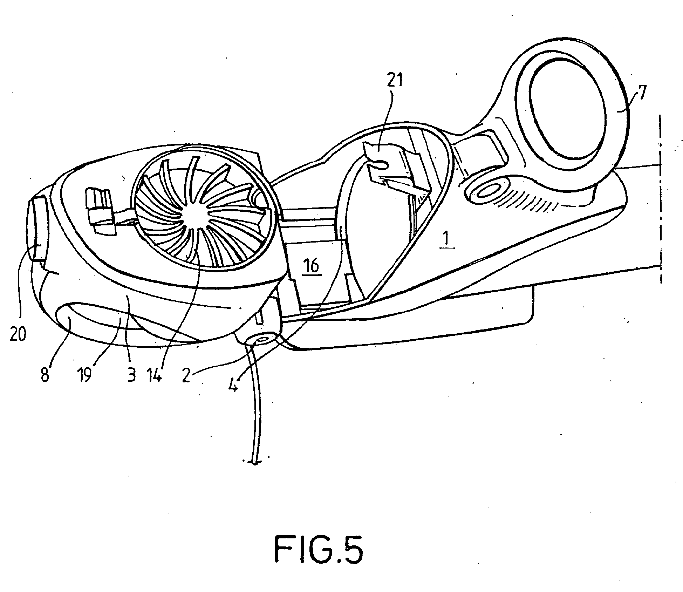

Figure 4 shows the pivotal connection between the main body 1 and the housing 3, with the housing pivoted slightly away from the main body. Figure 5 is similar to Figure 4, but shows the housing 3 fully pivoted away from the main body 1. In this position, it will be apparent that both the impeller 14 and the slide valve 16 are easily accessible for cleaning, as is the proximal end of the primary tube 4 and the air outlet passage 11.

As best shown in Figure 4, the housing 3 is provided with a fixing bolt 20 which is engagable with an internally-threaded hollow stub shaft 21a of a flexible arm 21 fixed to the main body 1 for locking the housing to the main body when the debris collector is in the operational position shown in Figure 1. A microswitch 22 is associated with the fixing bolt 20, the arrangement being such that, in order to permit pivoting of the housing 3 relative to the main body 1, the first two or three turns of the fixing bolt activate the microswitch 22, via an injection moulded location tab 21b associated with the flexible arm 21, to turn the motor 13 off. As about ten turns of the fixing bolt 20 are needed to remove it from engagement with the flexible arm 21, this ensures that there is plenty of time for the impeller 14 to stop before an operator can access the interior of the debris collector.

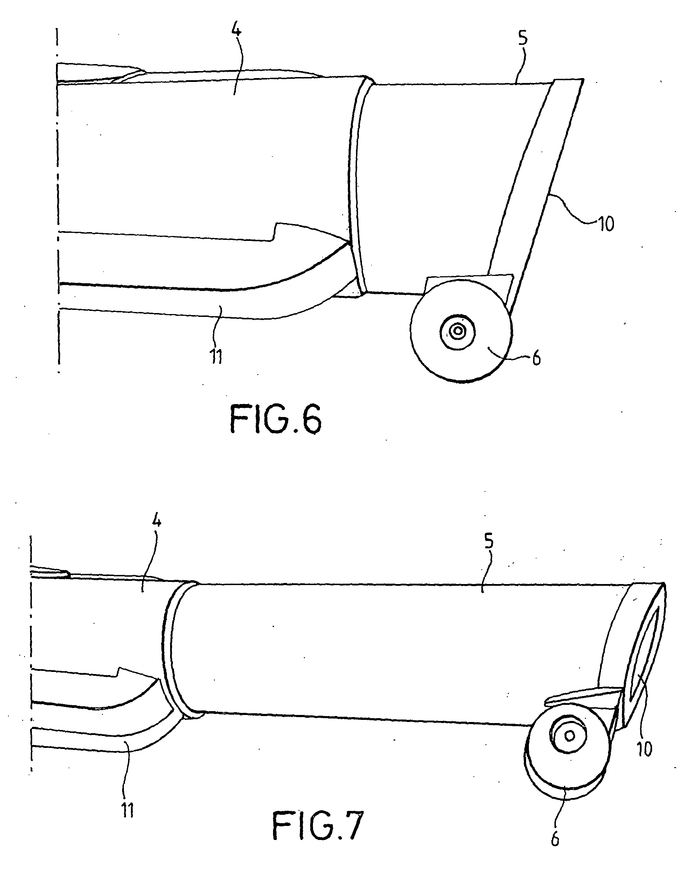

Figures 6 to 9 show the telescopic mounting of the secondary tube 5 within the primary tube 4. Thus, Figure 6 shows the secondary tube 5 fully telescoped within the primary tube 4. In this position, the debris collector can be packaged in a much smaller box than would be possible if the debris collector was provided at the point of sale with a single debris collection tube whose length is the same as the length of the fully telescoped out tubes 4 and 5.

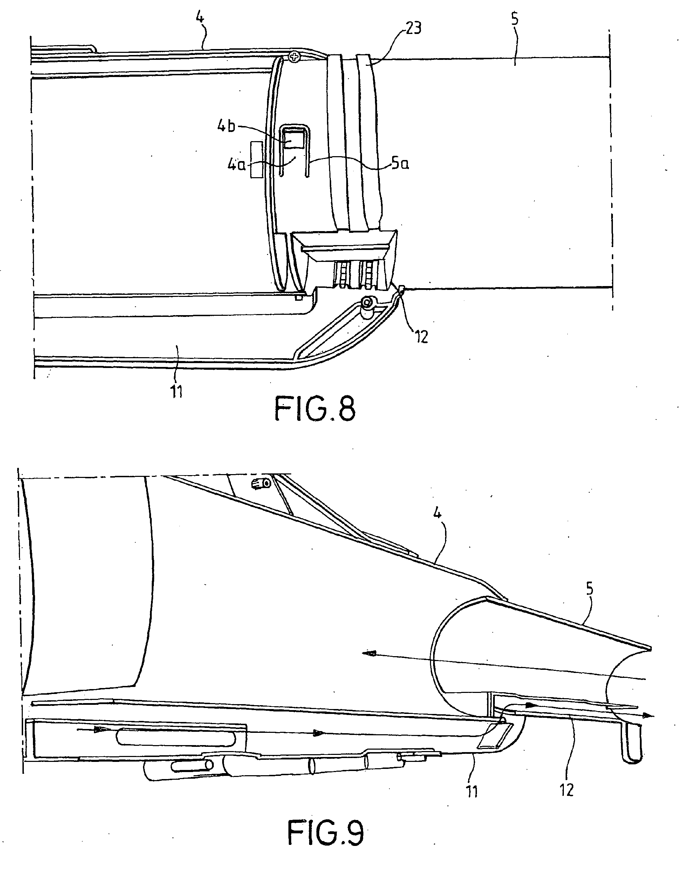

Figure 7 shows the tubes 4 and 5 in the fully telescoped out position, and Figure 8 shows how the tubes 4 and 5 are locked together in this fully telescoped out position. Thus, as shown in Figure 8, the secondary tube 5 is provided with an aperture 5a at its proximal end, and the primary tube 4 is provided with a flexible tab 4a having an outwardly-extending flange 4b which is engageable within the aperture 5a of the secondary tube 5. The two tubes 4 and 5 are formed with complementary screw threads, indicated generally by the,reference numeral 23, the arrangement being such that, when the secondary tube is fully extended and rotated relative to the primary tube, the tab 4a snaps into position with the flange 4b abutting one end of the aperture 5a, thereby locking the two tubes together. The passageways 11 and 12, formed respectively outside the primary tube 4 and inside the secondary tube 5, are positioned so that the distal end of the passageway 5 is contiguous with the proximal end of the passageway 12 (see also Figure 9) when the two tubes are in the locked position. This arrangement ensures that, when the two tubes 4 and 5 are locked together in the operating position, the passageways 11 and 12 are contiguous, thereby defining the "blow" passageway from the impeller 14 to the distal end of the debris collector.

## Claims

1. A debris collector comprising:
a chassis;
an impeller for establishing a flow of air; and
a duct supported by the chassis for conveying loose material entrained in a stream of air generated by the impeller towards a proximal region of the duct from a collection mouth at a distal end thereof;
wherein the impeller is mounted in a housing at the proximal end of the duct, the housing being pivotably attached to the chassis in such a manner that pivotal movement of the housing away from the chassis exposes the impeller and the downstream end of the duct for cleaning purposes.

2. A debris collector as claimed in claim 1, further comprising a removable collection container for collecting the loose material, and the chassis being provided with a nozzle for directing the stream of air and loose material from the impeller into the removable collection container.

3. A debris collector as claimed in claim 2, wherein the nozzle is directly aligned with the impeller, and is provided with smooth side walls for directing the air stream and loose material into the removable collection container.

4. Debris collector as claimed in any one of claims 1 to 3, further comprising an air passageway leading from the impeller to the collection mouth, the air passageway being separate from the duct.

5. A debris collector as claimed in claim 4 when appendant to claim 2, further comprising a valve for directing the stream of air from the impeller either into the nozzle or into the air passageway.

6. A debris collector as claimed in claim 5, wherein the valve is a slide valve mounted in the chassis for movement between a first position, in which the air stream passes from the impeller into the air passageway, and a second position, in which the air stream passes from the impeller into the nozzle.

7. A debris collector as claimed in claim 6, wherein the slide valve is positioned in such a manner that pivotal movement of the housing relative to the chassis to expose the impeller and the downstream end of the duct, also exposes the slide valve for cleaning purposes.

8. A debris collector as claimed in claim 6 or claim 7, wherein the slide valve defines a substantially smooth air-stream-engaging surface.

9. A debris collector as claimed in any one of claims 1 to 8, wherein the duct is constituted by primary and secondary ducts, the primary duct being fixed to the chassis, and the secondary duct being telescopically mounted with respect to the primary duct.

10. A debris collector as claimed in claim 9 when appendant to claim 4, wherein the air passageway is constituted by first and second air passageways associated respectively with the primary and secondary ducts.

11. A debris collector as claimed in claim 10, wherein the first air passageway is positioned on the exterior of the primary duct, and the second air passageway is positioned within the secondary duct.

12. A debris collector as claimed in claim 11, wherein the first and second air passageways are so formed that, when the secondary duct is fully telescoped out of the primary duct, the distal end of the first air passageway is contiguous with the proximal end of the second air passageway.

13. A debris collector as claimed in any one of claims 9 to 12, wherein the distal end of the primary duct and the proximal end of the secondary duct are provided with interengageable means for locking the two ducts together when the secondary duct is fully telescoped out with respect to the primary duct.

14. A debris collector as claimed in claim 13, wherein the interengageable means is constituted by an aperture formed in the proximal end of the secondary duct, and by a flanged tab formed at the distal end of the primary duct, the flanged tab being engageable in the aperture when the secondary duct is fully telescoped out of the primary duct.

15. A debris collector as claimed in claim 14, wherein the interengageable means further comprises complementary screw threads formed at the distal end of the primary duct and at the proximal of the secondary duct, the arrangement being such that, in the fully telescoped out configuration, engagement and rotation of the screw threads moves the flanged tab of the primary duct into the aperture of the secondary duct and moves the distal end of the first air passageway so as to be contiguous with the proximal of the second air passageway.

16. A debris collector comprising:
a chassis;
an impeller for establishing a flow of air; and
a duct supported by the chassis for conveying loose material entrained in a stream of air generated by the impeller towards a proximal region of the duct from a collection mouth at a distal end thereof;
wherein the duct is constituted by primary and secondary ducts, the primary duct being fixed to the chassis, and the secondary duct being telescopically mounted with respect to the primary duct.

17. A debris collector as claimed in claim 16, further comprising an air passageway leading from the impeller to the collection mouth, the air passageway being separate from the duct.

18. A debris collector as claimed in claim 17, wherein the air passageway is constituted by first and second air passageways associated respectively with the primary and secondary ducts.

19. A debris collector as claimed in claim 18, wherein the first air passageway is positioned on the exterior of the primary duct, and the second air passageway is positioned within the secondary duct.

20. A debris collector as claimed in claim 19, wherein the first and second air passageways are so formed that, when the secondary duct is fully telescoped out of the primary duct, the distal end of the first air passageway is contiguous with the proximal end of the second air passageway.

21. A debris collector as claimed in any one of claims 16 to 20, wherein the distal end of the primary duct and the proximal end of the secondary duct are provided with interengageable means for locking the two ducts together when the secondary duct is fully telescoped out with respect to the primary duct.

22. A debris collector comprising:
a chassis;
an impeller for establishing a flow of air;
a duct supported by the chassis for conveying loose material entrained in a stream of air generated by the impeller towards a proximal region of the duct from a collection mouth at a distal end thereof;
a removable collection container for collecting the loose material;
an air passageway leading from the impeller to the collection mouth, the air passageway being separate from the duct; and
a slide valve for directing the stream of air from the impeller either into the removable collection container or into the air passageway.

23. A debris collector as claimed in claim 22, wherein the slide valve is mounted in the chassis for movement between a first position, in which the air stream passes from the impeller into the air passageway, and a second position, in which the air stream passes from the impeller into the removable collection container.

24. A debris collector as claimed in claim 22 or claim 23, wherein the slide valve defines a substantially smooth air-stream-engaging surface.
